# FASCICULE DE BREVET EUROPEEN

(11) **EP 2 786 028 B1**
(45) Date de publication et mention de la délivrance du brevet: **03.02.2016**
(21) Numéro de dépôt: 12816690.7
(22) Date de dépôt: 30.11.2012
(51) Int. Cl.: F16B 21/08, F16B 5/12, F16B 5/06, B60R 13/02

(54) **ELEMENT DE VEHICULE ET SON ENSEMBLE DE FIXATION**
FAHRZEUGELEMENT SOWIE BEFESTIGUNGSANORDNUNG DAFÜR
VEHICLE ELEMENT, AND ATTACHMENT ASSEMBLY THEREFOR

(30) Priorité: 30.11.2011 FR 1160967
(43) Date de publication de la demande: 08.10.2014
(73) Titulaire: Faurecia Intérieur Industrie, 92000 Nanterre (FR)
(72) Inventeur: DUCHET, Dominique, F-60730 Cauvigny (FR); MAGNIEZ, Claude, F-60570 Andeville (FR)
(74) Mandataire: Cabinet Plasseraud
(86) Numéro de dépôt international: PCT/FR2012/052766
(87) Numéro de publication internationale: WO 2013/079881

(56) Documents cités:
- EP-A1- 0 456 187
- DE-A1-102004 004 658

## Description

La présente invention concerne un élément de véhicule comprenant une pièce de support et au moins un ensemble de fixation pour fixer l'élément à un autre élément du véhicule, l'ensemble de fixation comprenant :
- une première partie de fixation adaptée pour être fixée à l'autre élément ; et
- une deuxième partie de fixation venue de matière avec la pièce de support,
les première et deuxième parties de fixation comportant des moyens de liaison complémentaires adaptés pour fixer les première et deuxième parties de fixation l'une à l'autre, la deuxième partie de fixation comprenant un manchon faisant saillie de la pièce de support et s'étendant le long d'une direction sensiblement normale à la pièce de support depuis une portion d'extrémité fermée jusqu'à une portion d'extrémité ouverte, et la première partie de fixation étant adaptée pour être reçue dans le manchon par la portion d'extrémité ouverte et le long de ladite direction,
les moyens de liaison complémentaires comportant au moins un organe d'encliquetage et au moins une fenêtre d'encliquetage adaptés pour coopérer l'un avec l'autre, l'organe d'encliquetage étant disposé sur la première partie de fixation et la fenêtre d'encliquetage étant ménagée dans le manchon de la deuxième partie de fixation.

Un tel élément est par exemple un panneau de porte destiné à être fixé sur une structure de porte du véhicule.

On connaît un élément de ce type selon le préambule de la revendciation 1, par exemple d'après le document DE 10 2004 004 658 A1, dans lequel les fenêtres d'encliquetage sont réalisées au pied du manchon, c'est-à-dire dans la portion d'extrémité fermée. La désolidarisation des première et deuxième parties de fixation est réalisée à l'aide d'un élément à mémoire de forme relié à la première partie de fixation, l'activation de cet élément permettant de rétracter les organes d'encliquetage des fenêtres correspondantes.

Cependant, il a été constaté que la désolidarisation des première et deuxième parties de fixation conduisait généralement à un endommagement du manchon, l'endommagement étant tel que dans certains cas la deuxième partie de fixation ne permet plus d'assurer la fixation des éléments entre eux, nécessitant ainsi le remplacement de l'élément dans son ensemble. De plus, dans ce type d'élément, la hauteur du manchon doit être importante pour permettre aux organes d'encliquetage de se rétracter des fenêtres correspondantes, ce qui fragilise l'ensemble de fixation.

L'invention a pour but de proposer un élément simple, peu encombrant, peu coûteux et ayant une durée de vie accrue.

A cet effet, l'invention a pour objet un élément de véhicule du type précité, caractérisé en ce que la deuxième partie de fixation comprend au moins une patte de renfort du manchon faisant saillie de la portion d'extrémité ouverte du manchon sensiblement radialement vers l'extérieur, et
en ce que la fenêtre d'encliquetage est ménagée de façon adjacente à la patte de renfort de sorte que la patte de renfort renforce la fenêtre d'encliquetage.

De par cette caractéristique, les risques d'endommagement du manchon sont limités, prolongeant ainsi la durée de vie de l'élément et réduisant de ce fait les coûts de maintenance correspondants.

L'élément selon l'invention peut éventuellement comporter en outre une ou plusieurs des caractéristiques suivantes :
- la deuxième partie de fixation comprend deux fenêtres d'encliquetage opposées et deux pattes de renfort opposées renforçant les fenêtres d'encliquetage ;
- les moyens de liaison complémentaires comportent deux organes d'encliquetage opposés ;
- la deuxième partie de fixation comprend au moins une nervure de rigidification du manchon s'étendant le long du manchon depuis la patte de renfort vers la pièce de support ;
- la deuxième partie de fixation comprend au moins une nervure de rigidification du manchon s'étendant le long du manchon entre la patte de renfort et la pièce de support ;
- la deuxième partie de fixation comprend deux nervures de rigidification par patte de renfort s'étendant sensiblement parallèlement l'une à l'autre ;
- la deuxième partie de fixation comprend au moins une zone d'épaisseur réduite du manchon s'étendant le long de la portion d'extrémité fermée du manchon entre deux nervures de rigidification associées ;
- la fenêtre d'encliquetage est disposée entre les deux nervures de rigidification correspondantes ;
- la deuxième partie de fixation comprend des moyens de détrompage ; et
- la pièce de support et la deuxième partie de fixation sont fabriquées à partir de matière plastique.

L'invention sera mieux comprise à la lecture de la description qui va suivre d'un mode de réalisation de l'invention, donné uniquement à titre d'exemple en se référant aux dessins annexés, sur lesquels :
- la Figure 1 est une vue en coupe d'une partie d'un élément de véhicule selon l'invention fixé à un autre élément du véhicule ; et
- la Figure 2 est une vue en perspective éclatée d'une partie de fixation de l'élément de la Figure 1.

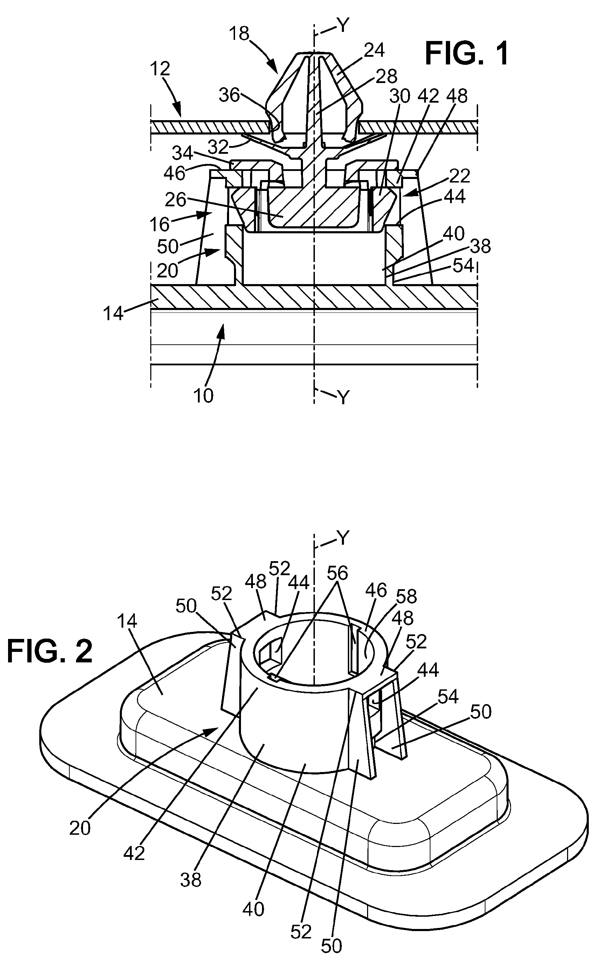

La Figure 1 illustre une partie d'un panneau de porte 10 de véhicule fixé à une structure de porte 12 du véhicule.

La structure de porte 12 peut être fabriquée à partir de métal ou de matière plastique.

Le panneau de porte 10 comprend une pièce de support 14 formant le panneau de porte 10 et au moins un ensemble de fixation 16 pour fixer le panneau de porte 10 à la structure de porte 12.

Avantageusement, le panneau de porte 10 comprend une pluralité d'ensembles de fixation 16 répartis sur la pièce de support 14.

L'ensemble de fixation 16 comprend une première partie de fixation 18, appelée par la suite agrafe 18, adaptée pour être fixée sur la structure de porte 12 et une deuxième partie de fixation 20, appelée par la suite porte-agrafe 20, venue de matière avec la pièce de support 14.

L'agrafe 18 et le porte-agrafe 20 comportent des moyens de liaison complémentaires 22 adaptés pour fixer l'agrafe 18 et le porte-agrafe 20 l'un à l'autre.

L'agrafe 18 comporte une tête 24 de forme sensiblement conique et un pied 26 de forme sensiblement cylindrique reliés entre eux par un corps 28.

L'agrafe 18 comprend au moins un organe d'encliquetage 30, en l'occurrence deux nez d'encliquetage 30 opposés dans l'exemple décrit ici, chaque nez d'encliquetage 30 faisant saillie du pied 26 sensiblement radialement vers l'extérieur.

L'agrafe 18 comprend une collerette d'étanchéité 32 agencée sur le corps 28 du côté de la tête 24 et un flasque de butée 34 agencé sur le corps 28 du côté du pied 26.

La tête 24 et la collerette d'étanchéité 32 sont prévues pour coopérer avec un trou 36 pratiqué dans la structure de porte 12 de manière à fixer l'agrafe 18 sur la structure de porte 12 par clippage.

Le pied 26 et le flasque de butée 34 sont prévus pour coopérer avec le porte-agrafe 20.

En référence à la Figure 2, le porte-agrafe 20 comprend un manchon 38 faisant saillie de la pièce de support 14 et s'étendant le long d'une direction Y sensiblement normale à la pièce de support 14.

Le manchon 38 présente une forme sensiblement cylindrique et s'étend entre une portion d'extrémité 40 fermée par la pièce de support 14 et une portion d'extrémité opposée 42 ouverte.

Le porte-agrafe 20 comprend au moins une fenêtre d'encliquetage 44, deux fenêtres d'encliquetage 44 opposées dans l'exemple décrit ici, chaque fenêtre d'encliquetage 44 étant ménagée dans le manchon 38 et adaptée pour coopérer par encliquetage avec le nez d'encliquetage 30 correspondant de l'agrafe 18.

Les nez d'encliquetage 30 et les fenêtres d'encliquetage 44 forment ainsi les moyens de liaison complémentaires 22.

Avantageusement, les fenêtres d'encliquetage 44 sont agencées à proximité ou au niveau de la portion d'extrémité ouverte 42. Cet agencement permet ainsi d'utiliser des agrafes 18 ayant une tête 24 de faible hauteur, réduisant l'encombrement des ensembles de fixation 16.

Les fenêtres d'encliquetage 44 sont accessibles à un opérateur depuis l'extérieur du manchon 38.

Le manchon 38 est adapté pour recevoir l'agrafe 18 par la portion d'extrémité ouverte 42 et le long de la direction Y, plus précisément uniquement le long de la direction Y. L'assemblage de l'agrafe 18 sur le manchon 38 ne nécessite pas de mouvements complexes dans plusieurs directions. L'assemblage est donc simplifié et permet de réduire le temps de montage de l'agrafe 18 sur le porte-agrafe 20. Cet assemblage peut être effectué par un opérateur ou bien par un robot.

L'agrafe 18 est ainsi insérée dans le manchon 38 jusqu'à ce que les nez d'encliquetage 30 s'encliquettent dans les fenêtres d'encliquetage 44 correspondantes et que le flasque de butée 34 bute contre la surface supérieure 46 de la portion d'extrémité ouverte 42.

Le porte-agrafe 20 comprend au moins une patte 48 de renfort du manchon 38, deux pattes de renfort 48 opposées dans l'exemple décrit ici, chaque patte de renfort 48 faisant saillie de la portion d'extrémité ouverte 42 du manchon 38 sensiblement radialement vers l'extérieur.

Les pattes de renfort 48 sont disposées de façon adjacente aux fenêtres d'encliquetage 44, plus précisément entre les fenêtres d'encliquetage 44 et la surface supérieure 46 de la portion d'extrémité ouverte 42. Cet agencement permet ainsi de renforcer localement et au juste nécessaire les fenêtres d'encliquetage 44.

Les pattes de renfort 48 s'étendent en regard des fenêtres d'encliquetage 44, de préférence sur une longueur supérieure ou égale à la longueur de la fenêtre d'encliquetage, perpendiculairement à la direction Y, suivant une direction circonférentielle (périphérique). Dans une variante de réalisation, les pattes de renfort pourraient se rejoindre, de sorte à s'étendre tout autour de la surface supérieure 46 de la portion d'extrémité ouverte 42.

De plus, cet agencement permet de réduire la distance entre les fenêtres d'encliquetage 44 et la face supérieure 46 de la portion d'extrémité ouverte 42 en la transférant en partie radialement. La hauteur du porte-agrafe 20 est donc réduite.

Le porte-agrafe 20 comprend au moins une nervure 50 de rigidification du manchon 38, de préférence deux nervures de rigidification 50 par patte de renfort 48 soit quatre nervures de rigidification 50 dans l'exemple décrit ici, chaque nervure de rigidification 50 s'étendant le long du manchon 38 depuis la patte de renfort 48 correspondante vers la pièce de support 14, et dans l'exemple décrit ici chaque nervure de rigidification 50 s'étend le long du manchon 38 entre la patte de renfort 48 correspondante et la pièce de support 14.

Les deux nervures de rigidification 50 associées à une patte de renfort 48 sont donc disposées sensiblement perpendiculairement à la patte de renfort 48 et relient chacune un bord latéral 52 de la patte de renfort 48 à la pièce de support 14.

Les deux nervures de rigidification 50 associées à une patte de renfort 48 sont disposées sensiblement parallèlement l'une à l'autre et de part et d'autre de la fenêtre d'encliquetage 44 correspondante. Cet agencement permet ainsi de renforcer les fenêtres d'encliquetage 44 de manière simple, robuste, et pouvant accepter un nombre important de désolidarisations entre l'agrafe 18 et le porte-agrafe 20, tout en conservant la même qualité d'encliquetage des nez d'encliquetage 30 dans les fenêtres d'encliquetage 44.

Le porte-agrafe 20 comprend au moins une zone 54 d'épaisseur réduite du manchon 38, deux zones d'épaisseur réduite 54 dans l'exemple décrit ici, chaque zone d'épaisseur réduite 54 s'étendant le long de la portion d'extrémité fermée 40 du manchon 38 entre deux nervures de rigidification 50 associées.

L'ensemble de fixation 16 comprend également des moyens de détrompage permettant un indexage correct de l'agrafe 18 sur le porte-agrafe 20. Les moyens de détrompage comprennent par exemple deux rainures opposées 56 ménagées sur la surface intérieure 58 du manchon 38 du porte-agrafe 20 et adaptées pour recevoir des doigts correspondants faisant saillie du pied 26 de l'agrafe 18 sensiblement radialement vers l'extérieur.

La hauteur du porte-agrafe 20 peut être ajustée en fonction du jeu prévu entre le porte-agrafe 20 et l'agrafe 18, l'ajustement étant réalisé de manière simple en réduisant la hauteur de la portion d'extrémité ouverte 42 du manchon 38 comprise entre la surface supérieure 46 et la surface d'appui des nez d'encliquetage 30 dans les fenêtres d'encliquetage 44.

Le porte-agrafe 20 est moulé d'une seule pièce avec la pièce de support 14 notamment par injection de matière plastique pour former le panneau de porte 10.

La forme simple du porte-agrafe 20 ne nécessite pas un outillage complexe.

En outre, la forme symétrique du porte-agrafe 20 ainsi que l'insertion de l'agrafe 18 sur le porte-agrafe 20 uniquement selon la direction Y normale à la pièce de support 14 permet d'orienter le porte-agrafe 20 par rapport à la pièce de support 14 de manière quelconque.

De plus, l'encombrement réduit du porte-agrafe 20 permet non seulement de faciliter le procédé de démoulage du panneau de porte 10 mais également de prévoir une pluralité de porte-agrafes 20 sur toute l'étendue de la pièce de support 14, et ce sans contrainte sur les emplacements des porte-agrafes 20.

Par ailleurs, les zones 54 d'épaisseur réduite du manchon 38 permettent de limiter des défauts d'aspect qui pourraient survenir sur la pièce de support 14 lors du démoulage.

Pour fixer le panneau de porte 10 à la structure de porte 12, les agrafes 18 sont préalablement encliquetées sur les porte-agrafes 20 correspondants, et il suffit alors à un opérateur de clipper les agrafes 18 sur la structure de porte 12 par un simple placage du panneau de porte 10 sur la structure de porte 12.

Le montage du panneau de porte 10 sur la structure de porte 12 est donc très simple.

Le démontage du panneau de porte 10 et de la structure de porte 12 se fait tout aussi simplement en les éloignant l'un de l'autre. Les pattes de renfort 48 et les nervures de rigidification 50 des porte-agrafes 20 s'opposent à l'effort de déclippage de la structure de porte 12 qui se sépare alors du panneau de porte 10, les agrafes 18 restant encliquetées sur les porte-agrafes 20 correspondants.

Ces opérations de montage/démontage peuvent être répétées un certain nombre de fois au-delà duquel les agrafes 18 nécessitent d'être remplacées. Pour cela, il suffit à l'opérateur de rétracter, par exemple à l'aide d'une pince, les nez d'encliquetage 30 des fenêtres d'encliquetage 44 et d'emboîter de nouvelles agrafes 18 sur les porte-agrafes 20.

Les opérations de maintenance du panneau de porte 10 sont donc également très simples.

L'invention propose donc un élément de véhicule simple, peu encombrant, peu coûteux et ayant une durée de vie accrue.

En effet, les pattes de renfort et les nervures de rigidification permettent de rigidifier les porte-agrafes, en particulier dans les régions d'encliquetage avec les agrafes, de telle sorte que, lors des opérations de montage/démontage, les risques d'endommagement et d'usure sont reportés sur les agrafes. En particulier, on réduit le risque de fissuration du porte-agrafe 20 entre les fenêtres d'encliquetage 44 et l'extrémité ouverte 42.

De plus, les pattes de renfort et les nervures de rigidification permettent encore de renforcer les porte-agrafes pour limiter les risques d'endommagement et d'usure des porte-agrafes lors des opérations de maintenance au cours desquelles les agrafes sont changées.

L'invention n'est nullement limitée au mode de réalisation représenté sur les Figures et fourni à titre illustratif et non limitatif. Ainsi, le nombre d'ensembles de fixation pourrait être différent et dépend des dimensions de la pièce de support ainsi que du cahier des charges correspondant à l'élément du véhicule considéré.

L'invention a été décrite en se référant à un panneau de porte de véhicule, mais il est tout à fait possible d'appliquer l'invention à tout équipement approprié du véhicule, par exemple un gousset de porte.

Les fenêtres d'encliquetage 44 ont été représentées débouchantes. Bien que ce ne soit pas préféré, elles pourraient ne pas être débouchantes et former un trou borgne destiné à recevoir l'organe d'encliquetage 30.

## Revendications

1. Elément (10) de véhicule comprenant une pièce de support (14) et au moins un ensemble de fixation (16) pour fixer l'élément (10) à un autre élément (12) du véhicule, l'ensemble de fixation (16) comprenant :
- une première partie de fixation (18) adaptée pour être fixée à l'autre élément (12) ; et
- une deuxième partie de fixation (20) venue de matière avec la pièce de support (14),
les première et deuxième parties de fixation (18, 20) comportant des moyens de liaison complémentaires (22) adaptés pour fixer les première et deuxième parties de fixation (18, 20) l'une à l'autre, la deuxième partie de fixation (20) comprenant un manchon (38) faisant saillie de la pièce de support (14) et s'étendant le long d'une direction (Y) sensiblement normale à la pièce de support (14) depuis une portion d'extrémité fermée (40) jusqu'à une portion d'extrémité ouverte (42), et la première partie de fixation (18) étant adaptée pour être reçue dans le manchon (38) par la portion d'extrémité ouverte (42) et le long de ladite direction (Y),
les moyens de liaison complémentaires (22) comportant au moins un organe d'encliquetage (30) et au moins une fenêtre d'encliquetage (44) adaptés pour coopérer l'un avec l'autre, l'organe d'encliquetage (30) étant disposé sur la première partie de fixation (18) et la fenêtre d'encliquetage (44) étant ménagée dans le manchon (38) de la deuxième partie de fixation (20),
**caractérisé en ce que** la deuxième partie de fixation (20) comprend au moins une patte (48) de renfort du manchon (38) faisant saillie de la portion d'extrémité ouverte (42) du manchon (38) sensiblement radialement vers l'extérieur, et
**en ce que** la fenêtre d'encliquetage (44) est ménagée de façon adjacente à la patte de renfort (48) de sorte que la patte de renfort (48) renforce la fenêtre d'encliquetage (44).

2. Elément (10) selon la revendication 1, **caractérisé en ce que** la deuxième partie de fixation (20) comprend deux fenêtres d'encliquetage (44) opposées et deux pattes de renfort (48) opposées renforçant les fenêtres d'encliquetage (44).

3. Elément (10) selon la revendication 2, **caractérisé en ce que** les moyens de liaison complémentaires (22) comportent deux organes d'encliquetage (30) opposés.

4. Elément (10) selon l'une quelconque des revendications 1 à 3, **caractérisé en ce que** la deuxième partie de fixation (20) comprend au moins une nervure (50) de rigidification du manchon (38) s'étendant le long du manchon (38) depuis la patte de renfort (48) vers la pièce de support (14).

5. Elément (10) selon l'une quelconque des revendications 1 à 4, **caractérisé en ce que** la deuxième partie de fixation (20) comprend au moins une nervure (50) de rigidification du manchon (38) s'étendant le long du manchon (38) entre la patte de renfort (48) et la pièce de support (14).

6. Elément (10) selon la revendication 4 ou 5, **caractérisé en ce que** la deuxième partie de fixation (20) comprend deux nervures de rigidification (50) par patte de renfort (48) s'étendant sensiblement parallèlement l'une à l'autre.

7. Elément (10) selon la revendication 6, **caractérisé en ce que** la deuxième partie de fixation (20) comprend au moins une zone (54) d'épaisseur réduite du manchon (38) s'étendant le long de la portion d'extrémité fermée (40) du manchon (38) entre deux nervures de rigidification (50) associées.

8. Elément (10) selon la revendication 6 ou 7, **caractérisé en ce que** la fenêtre d'encliquetage (44) est disposée entre les deux nervures de rigidification (50) correspondantes.

9. Elément (10) selon l'une quelconque des revendications 1 à 8, **caractérisé en ce que** la deuxième partie de fixation (20) comprend des moyens de détrompage (56).

10. Elément (10) selon l'une quelconque des revendications 1 à 9, **caractérisé en ce que** la pièce de support (14) et la deuxième partie de fixation (20) sont fabriquées à partir de matière plastique.

## Patentansprüche

1. Element (10) eines Fahrzeugs, das ein Stützteil (14) und mindestens eine Befestigungsanordnung (16) zum Befestigen des Elements (10) an einem anderen Element (12) des Fahrzeugs umfasst, wobei die Befestigungsanordnung (16) Folgendes umfasst:
- einen ersten Befestigungsteil (18), der dazu ausgeführt ist, an dem anderen Element (12) befestigt zu werden; und
- einen zweiten Befestigungsteil (20), der mit dem ersten Stützteil (14) integral ist,
wobei der erste und der zweite Befestigungsteil (18, 20) komplementäre Verbindungsmittel (22) umfassen, die dazu ausgeführt sind, den ersten und den zweiten Befestigungsteil (18, 20) miteinander zu verbinden, wobei der zweite Befestigungsteil (20) eine Hülse (38) umfasst, die vom Stützteil (14) vorsteht und sich entlang einer Richtung (Y) erstreckt, die im Wesentlichen senkrecht zum Stützteil (14) von einem geschlossenen Endabschnitt (40) bis zu einem geöffneten Endabschnitt (42) verläuft, und wobei der erste Befestigungsteil (18) dazu ausgeführt ist, in der Hülse (38) durch den geöffneten Endabschnitt (42) und entlang der Richtung (Y) aufgenommen zu werden,
wobei die komplementären Verbindungsmittel (22) mindestens ein Rastelement (30) und mindestens ein Rastfenster (44) umfassen, die zum Zusammenwirken miteinander ausgeführt sind, wobei das Rastelement (30) auf dem ersten Befestigungsteil (18) angeordnet ist und das Rastfenster (44) in der Hülse (38) des zweiten Befestigungsteils (20) ausgebildet ist,
**dadurch gekennzeichnet, dass** der zweite Befestigungsteil (20) mindestens eine Lasche (48) zur Verstärkung der Hülse (38) umfasst, die vom geöffneten Endabschnitt (42) der Hülse (38) im Wesentlichen radial nach außen vorsteht, und
dass das Rastfenster (44) neben der Verstärkungslasche (48) ausgebildet ist, so dass die Verstärkungslasche (48) das Rastfenster (44) verstärkt.

2. Element (10) nach Anspruch 1, **dadurch gekennzeichnet, dass** der zweite Befestigungsteil (20) zwei gegenüberliegende Rastfenster (44) und zwei gegenüberliegende Verstärkungslaschen (48), die die Rastfenster (44) verstärken, umfasst.

3. Element (10) nach Anspruch 2, **dadurch gekennzeichnet, dass** die komplementären Verbindungsmittel (22) zwei gegenüberliegende Rastelemente (30) umfassen.

4. Element (10) nach einem der Ansprüche 1-3, **dadurch gekennzeichnet, dass** der zweite Befestigungsteil (20) mindestens eine Rippe (50) zur Versteifung der Hülse (38) umfasst, die sich entlang der Hülse (38) von der Verstärkungslasche (48) zum Stützteil (14) erstreckt.

5. Element (10) nach einem der Ansprüche 1-4, **dadurch gekennzeichnet, dass** der zweite Befestigungsteil (20) mindestens eine Rippe (50) zur Versteifung der Hülse (38) umfasst, die sich entlang der Hülse (38) zwischen der Verstärkungslasche (48) und dem Stützteil (14) erstreckt.

6. Element (10) nach Anspruch 4 oder 5, **dadurch gekennzeichnet, dass** der zweite Befestigungsteil (20) zwei Versteifungsrippen (50) pro Verstärkungslasche (48) umfasst, die sich im Wesentlichen parallel zueinander erstrecken.

7. Element (10) nach Anspruch 6, **dadurch gekennzeichnet, dass** der zweite Befestigungsteil (20) mindestens einen Bereich (54) reduzierter Dicke der Hülse (38) umfasst, der sich entlang des geschlossenen Endabschnitts (40) der Hülse (38) zwischen zwei zugehörigen Versteifungsrippen (50) erstreckt.

8. Element (10) nach Anspruch 6 oder 7, **dadurch gekennzeichnet, dass** das Rastfenster (44) zwischen den beiden entsprechenden Versteifungsrippen (50) angeordnet ist.

9. Element (10) nach einem der Ansprüche 1-8, **dadurch gekennzeichnet, dass** der zweite Befestigungsteil (20) Unverwechselbarkeitsmittel (56) umfasst.

10. Element (10) nach einem der Ansprüche 1-9, **dadurch gekennzeichnet, dass** das Stützteil (14) und der zweite Befestigungsteil (20) aus Kunststoff hergestellt sind.

## Claims

1. Vehicle element (10) comprising a supporting part (14) and at least one fastening assembly (16) for fixing the element (10) to another element (12) of the vehicle, the fastening assembly (16) comprising:
- a first fixing part (18) adapted to be fastened to the other element (12); and
- a second fixing part (20) integral with the supporting part (14),
the first and second fixing parts (18, 20) comprising complementary connecting means (22) adapted to fasten the first and second fixing parts (18, 20) to one another, the second fixing part (20) comprising a sleeve (38) projecting from the supporting part (14) and extending along a direction (Y) substantially perpendicular to the supporting part (14) from a closed end portion (40) to an open end portion (42), the first fixing part (18) being adapted to be received in the sleeve (38) by the open end portion (42) and along said direction (Y),
the complementary connecting means (22) comprising at least one snap-fit element (30) and at least one snap-fit window (44) designed to co-operate with one another, the snap-fit element (30) being disposed on the first fixing part (18) and the snap-fit window (44) being provided in the sleeve (38) of the second fixing part (20),
**characterised in that** the second fixing part (20) comprises at least one tab (48) for reinforcing the sleeve (38) projecting from the open end part (42) of the sleeve (38) substantially radially outwards, and
**in that** the snap-fit window (44) is disposed adjacent to the reinforcing tab (48) so that the reinforcing tab (48) reinforces the snap-fit window (44).

2. Element (10) according to claim 1, **characterised in that** the second fixing part (20) comprises two opposing snap-fit windows (44) and two opposing reinforcing tabs (48) reinforcing the snap-fit windows (44).

3. Element (10) according to claim 2, **characterised in that** the complementary connecting means (22) comprise two opposing snap-fit elements (30).

4. Element (10) according to any one of claims 1 to 3, **characterised in that** the second fixing part (20) comprises at least one rib (50) for stiffening the sleeve (38) extending along the sleeve (38) from the reinforcing tab (48) towards the supporting part (14).

5. Element (10) according to any one of claims 1 to 4, **characterised in that** the second fixing part (20) comprises at least one rib (50) for stiffening the sleeve (38) extending along the sleeve (38) between the reinforcing tab (48) and the supporting part (14).

6. Element (10) according to claim 4 or 5, **characterised in that** the second fixing part (20) comprises two stiffening ribs (50) per reinforcing tab (48) extending substantially parallel with one another.

7. Element (10) according to claim 6, **characterised in that** the second fixing part (20) comprises at least one region (54) of the sleeve (38) having a slimmer thickness extending along the closed end portion (40) of the sleeve (38) between two associated stiffening ribs (50).

8. Element (10) as claimed in claim 6 or 7, **characterised in that** the snap-fit window (44) is disposed between the two corresponding stiffening ribs (50).

9. Element (10) according to any one of claims 1 to 8, **characterised in that** the second fixing part (20) comprises locating means (56).

10. Element (10) according to any one of claims 1 to 9, **characterised in that** the supporting part (14) and the second fixing part (20) are manufactured from plastic material.
